# EUROPÄISCHE PATENTSCHRIFT

(11) **EP 1 255 932 B1**
(45) Veröffentlichungstag und Bekanntmachung des Hinweises auf die Patenterteilung: **23.11.2005**
(21) Anmeldenummer: 01909534.8
(22) Anmeldetag: 24.01.2001
(51) Int. Cl.: F03D 3/04, F03D 3/00

(54) **WINDKRAFTANLAGE FÜR DÄCHER ZUR ENERGIEGEWINNUNG**
WIND POWER FACILITY FOR ROOFS FOR GENERATING ENERGY
CONVERTISSEUR D'ENERGIE EOLIENNE SUR TOITURES, POUR LA PRODUCTION D'ENERGIE

(30) Priorität: 31.01.2000 DE 20001636 U
(43) Veröffentlichungstag der Anmeldung: 13.11.2002
(73) Patentinhaber: Krahmer, Jörn, 28879 Grasberg (DE)
(72) Erfinder: Krahmer, Jörn, 28879 Grasberg (DE)
(74) Vertreter: Kloiber, Thomas
(86) Internationale Anmeldenummer: PCT/DE2001/000328
(87) Internationale Veröffentlichungsnummer: WO 2001/057397

(56) Entgegenhaltungen:
- DE-A- 2 914 957
- DE-A- 19 644 890
- DE-U- 9 314 187

## Beschreibung

Die Erfindung betrifft eine Windkraftanlage für Dächer zur Energiegewinnung mit einem auf einem Dach montierten Windrad, bei dem das Windrad einen elektrischen Generator antreibt.

Aus dem deutschen Gebrauchsmuster G 93 14 187.4 ist eine "Windkraftmaschine zur Anordnung auf Gebäuden" bekannt. Sie besteht in der Regel aus zwei Windrädern zur Umwandlung von Energie des natürlichen Windes in mechanische bzw. elektrische Energie und ist zum Aufsetzen auf vorzugsweise spitze Dächer geeignet. Diese Windkraftmaschine hat eine oder mehrere windbetriebene Rotoren, deren Drehachse oder -achsen rechtwinkling zur Windrichtung ausgerichtet sind und ist mit verstellbaren horizontalen und vertikalen Windleiteinrichtungen, die beidseitig des einen oder der mehreren Rotoren Windleitkammern bilden, in einem Gehäuse als kompakte montagefahige Baueinheit ohne Generator angeordnet, dessen Gehäuseunterteil der Dachform entspricht, auf dem das Gehäuse aufgesetzt ist. Die horizontal verstellbaren Windleiteinrichtungen sind zum Wind hin gelagert und lenken den Wind immer auf den oberen Bogenabschnitt des oder der Rotoren ab. Wenngleich diese Windkraftmaschine nachrüstbar ist, so ist sie ein Fremdkörper auf einem Gebäude und erhöht dessen bauaufsichtlich oft vorgegebene Gesamthöhe. Eine Integration des Gehäuses in ein vorgegebenes Dach hinein ist weder vorgesehen noch ohne baulich aufwendige Maßnahmen möglich. Auch ist die Effizienz dieses Standes der Technik dadurch beschränkt, dass ausdrücklich kein ober- und unterschlägiger Betrieb der Rotoren möglich ist, was überdies ein externes Wendegetriebe für den Fall der Windrichtungsänderung oder beim Betrieb von zwei Rotoren erforderlich macht. Wenngleich das Gehäuse auch die durch Wind beaufschlagten Bauteile enthält, so ist das Wendegetriebe und auch der Generator gesondert davon aufwendig im Dachboden zu befestigen und mit dem Rotor aufwendig in Verbindung zu bringen. Besonders nachteilig ist ferner, dass die Rotoren weitgehend vollständig offen zugänglich sind und damit die häufig nicht geringen Laufgeräusche ungehindert in die Umgebung gelangen, darüberhinaus auch Lichtspiegelungen und Schattenreflektionen verursachen und das Gebäude die häufig konstruktiv ausgestatteten Funktionen eines vorhandenen Dachfirstes nur unzureichend ersetzen kann.

Windkraftanlagen sind darüberhinaus auch allgemein bekannt. Sie weisen in der Regel ein Windrad mit einem Generator auf, der integraler Bestandteil oder auch getrennter Bestandteil des Windrades ist. Solche Windräder sind vielfältig einsetzbar, so auch auf Dächern von Gebäuden bzw. deren Dachflächen, auf Hausdächern und sonstigen dachförmigen Konstruktionen.

Entsprechende Windkrattanlagen kommen insbesondere zur ergänzenden Energieerzeugung zum Einsatz. Einerseits, um die öffentlichen Versorgungsnetze zu entlasten und andererseits, um auch in entlegenen Regionen mit verhältnismäßig einfacher Technik hinreichend elektrische Energie zu erzeugen bzw. bereitzustellen.

Bedauerlicherweise teilen derartige Windkraftanlagen diejenigen Nachteile, die einzelne Windräder und auch Windfarmen mit einem oder mehreren separaten Windrädern haben. D.h., ihnen werden insbesondere nachteilig Geräuschbelästigungen, die Vogelwelt und den regionalen Flugverkehr beeinflussende Schatten- und Lichtreflexerzeugung und den freien Flug fliegender Lebewesen beeinträchtigende Wirkungen nachgesagt.

Entsprechende bekannte Windkraftanlagen enthalten somit ein gewisses Gefahren- und Belästigungspotential und sind daher wenig geeignet, im Bereich von Energiesparhausern o. dgl. zum Einsatz zu gelangen.

Die im Stand der Technik bekannten Windkraftanlagen sind somit nur wenig geeignet, die der vorliegenden Erfindung zugrundeliegende Aufgabe befriedigend zu lösen.

Aufgabe der vorliegenden Erfindung ist es, eine Windkraftanlage für Dächer zur Energiegewinnung zu schaffen, die keine der eingangs genannten Nachteile hat, nachrüstbar und robust aufgebaut ist, kein frei zugängliches Windrad hat, sowie keine Schatten- und Lichtreflexemmision und quasi keine Geräuschemmision verursacht und keine funktionalen und optische Beeinträchtigungen des Daches erzeugt.

Erfindungsgemäß wird diese Aufgabe dadurch gelöst, daß das Windrad und der Generator integraler Bestandteil einer Firstabdeckung sind und in Abstand zum Windrad zu beiden Seiten Windleitbleche schwenkbar gelagert sind.

Überraschenderweise hat sich gezeigt, daß sich der Bereich der üblicherweise vorhandenen Firstziegel besonders vorteilhaft, wie auch konstruktiv einfach dazu geeignet ist, das Windrad und sogar den Generator einer Windkraftanlage als integrale Bestandteile einer erfindungsgemäßen Firstabdeckung aufzunehmen, wobei die Firstabdeckung ähnlich einem Pagodendach ausgeführt sein kann. Auf weitere Vorteile wird nachfolgend hingewiesen.

Erfindungsgemäß ist ferner vorgesehen, daß die Firstabdeckung in Abstand zum Dach und zu der einen oder mehreren Dachflächen des Daches angeordnet ist. Optisch, wie auch funktionell erlaubt diese Ausgestaltung auf einfache Weise einen Bereich auf dem Dach zu schaffen, der einerseits geschützt ist, wie der Dachraum selbst, andererseits von Wind aus allen Himmelsrichtungen durchströmt werden kann. Der Bereich ist folglich äußerst gut für die Anordnung eines Windrades geeignet, das von außen in keiner Weise in Erscheinung tritt. Optisch gliedert sich die erfindungsgemäße Firstabdeckung in die Dachflächen des Daches fast unsichtbar ein.

Erfindungsgemäß ist ferner vorgesehen, daß das Windrad zentral im Bereich des Firstes des Daches oberhalb des Firstes des Daches und unterhalb der Firstabdeckung angeordnet ist. Obgleich in allen Regionen der Erde Windstärken aus unterschiedlichen Richtungen unterschiedlich häufig auftreten, ist es durch die erfindungsgemäße zentrale Anordnung des Windrades einfach möglich, an sich jede Windrichtung gleichermaßen ausnutzen zu können.

Erfindungsgemäß ist weiter vorgesehen, daß das Windrad derart ausrichtbar ist, daß Wind aus einer oder mehreren Richtungen es antreibt und der Wind durch einen von mehreren Kanälen, gebildet durch den Abstand zwischen Firstabdeckung und Dachfläche auf das Windrad gelangt. Hierdurch kann die anmeldungsgemäße Firstabdeckung Funktionen der Firstziegel übernehmen, also den Firstbereich sicher verschließen. Darüberhinaus gewährleistet der Abstand zwischen Dachfläche und Firstabdeckung den Eintritt von Wind in den zentralen Bereich oberhalb des Firstes des Daches eines Gebäudes o. dgl. Der Weg dorthin kann, je nach Dachform durch einen oder mehrere Kanäle führen und erreicht so das Windrad. Das Windrad selbst kann beispielsweise um 360° um eine vertikale Achse drehbar angeordnet sein. Dies wäre vorteilhaft bei einem kegelförmigen Dach. Je nach Dachform sind auch unbewegliche, fest installierte Windräder denkbar. Allen Varianten gemeinsam ist, daß der Wind immer auf das Windrad gelenkt wird.

Gemäß einer erfindungsgemäßen Ausgestaltung ist vorgesehen, daß bei einem Dach mit horizontaler Firstkante ein sich axial in Abstand parallel zum und oberhalb des Firstes erstreckender Querstromlüfter das Windrad bildet, dessen rotierende Achse indirekt oder direkt den Generator antreibt. Hiermit ist für die häufigste verwendete Dachform ein optimaler Kompromiß bezüglich verschiedener möglicher Windrichtungen, dem Wirkungsgrad und dem Aufwand zur konstruktiven Installation des Windrades gefunden. Denn, wird eine der großen Dachflächen zur vorherrschenden Windrichtung einer Region ausgerichtet, dann genügt in der Regel die Erfassung dieser und ggf. noch der entgegengesetzten Windrichtung, wobei dann ein walzenförmiger Lüfter Anwendung finden kann, der einen äußerst günstigen Wirkungsgrad hat. Die Achse eines solchen walzenförmigen Querstromlüfters kann auch zum Antrieb eines elektrischen Generators dienen. Eine Drehbarkeit um eine vertikale Achse kann in diesem Anwendungsfall entfallen. Dennoch kann ein großes Spektrum von Windrichtungen erfasst werden.

Anmeldungsgemäß ist vorteilhaft vorgesehen, dass Übertragungsmittel den im Dachraum angeordneten Generator antreiben oder der Generator integraler Bestandteil des Querstromlüfters auf dessen Achse ist. Statt Keilriemen sind auch elektrische oder sonstige mechanische Übertragungsmittel geeignet. Hierdurch kann insbesondere bei großen Dächern und dadurch bedingten großen Walzen von Querstromlüftern der einer Wartung unterliegende elektrische Generator im geschützten Dachraum gewichtssparend im Bereich unterhalb des Firstes angeordnet sein und von der sich drehenden Achse des Querstromlüfters angetrieben werden. Alternativ, insbesondere bei kleineren Anlagen, kann ein wartungsarmer Generator im Lüfter selbst untergebracht sein.

Vorteilhaft ist ferner vorgesehen, daß die Firstabdeckung zu jeder Dachfläche weisend eine Traufe hat, die mit der jeweiligen Dachfläche eine längliche schmale Kanalöffnung bildet. Hierdurch, also durch eine entsprechend weit auf die Dachfläche geführte Firstabdeckung wird die sichere Abdeckung des Firstbereiches gewährleistet. Darüberhinaus wird quasi automatisch wegen des Abstandes eine längliche schmale Kanalöffnung gebildet, wodurch, wegen der weit heruntergezogenen Dachflächen mit Traufe die Stauwirkung der Dachneigung auf den Wind gut ausgenutzt wird. Der auf der gesamten Dachfläche auftreffende Winddruck wird auf der Dachfläche zum First des Daches abgeleitet. Im Bereich des Firstes erhöht sich daher der Winddruck.

Ferner ist vorteilhaft vorgesehen, daß parallel und in Abstand zur Oberfläche der Walze des Querstromlüfters zu beiden Seiten Windleitbleche im Bereich des unteren Bogenabschnittes der Walze schwenkbar gelagert sind. Insbesondere im Bereich von den hier auch angesprochenen Satteldächern kommen i.d.R. zwei Hauptwindrichtungen zum Tragen, die sich um 180° in ihrer Richtung unterscheiden. Um für diese beiden Hauptwindrichtungen gleichermaßen eine optimale Beeinflußung des Querstromlüfters zu gewährleisten, sind anmeldungsgemäß lediglich zwei Windleitbleche vorzusehen. Sie sind schwenkbar gelagert auf einer zur Walzenachse parallelen Achse im Bereich und in Abstand der Mantelfäche der Walze im Bereich des unteren Bogenabschnittes, also vertikal unterhalb einer Horizontalebene, die die Achse der Walze schneidet. Im unbeeinflußten Zustand ruhen die Windleitbleche auf den vertikal unteren Flächen der Kanäle und geben einen oberen, sich ergänzenden Windkanal frei. Beeinflußt liegen sie an der Firstabdeckung an und geben einen unteren erweiterten Windkanal frei, je nach Windrichtung.

Vorteilhaft ist ferner vorgesehen, daß die Windleitbleche um eine zur Längserstreckung der Walze des Lüfters parallele Knickkante im äußeren Drittel entgegen dessen Drehsinn um einige Winkelgrade abgeknickt sind und eine bezüglich ihrer walzennahen Lagerung innere und äußere Fläche aufweisen. Hierdurch kann ein externer Antrieb der Windleitbleche entfallen. Denn, durch die abgeknickten äußeren Flächen ist deren Bewegung allein durch Windbeaufschlagung zu erreichen. Die Bewegung der Windleitbleche kann aber auch durch eine Mechanik beeinflusst werden, die z. B. durch eine Windfahne angesteuert wird. Die Mechanik kann allein durch Windkraft, aber auch elektrisch betrieben werden.

Vorteilhaft ist ferner vorgesehen, daß die äußere abgeknickte Fläche des einen Windleitbleches im unbeeinflußten Zustand in den Kanal ragt und die abgeknickte äußere Fläche des anderen Windleitbleches mit ihrer äußeren Kante auf dem Boden des Kanals aufliegt.

Hierduch ist sicher gewährleistet, daß bei einer bestimmten Windrichtung der Wind die abgeknickte äußere Fläche erfaßt und dieses Windleitblech anhebt und das gegenüberliegende Windleitblech ebenfalls aufgrund des Winddruckes angehoben wird. Bei 180° entgegengesetzter Windrichtung wird durch die abgeknickte äußere Fläche des letztgenannten Windleitbleches sichergestellt, daß dieses nicht vom Wind erfaßt und angehoben werden kann. Es liegt auf dem Kanalboden an und wird durch den Wind auch noch auf diesen gedrückt.

Anmeldungsgemäß ist vorteilhaft vorgesehen, daß die Windleitbleche im unbeeinflußten Zustand oder bei einer bestimmten Windrichtung einen sich ergänzenden Windkanal über den oberen Bogenabschnitt des Querstromlüfters freigeben und in einem von Wind entgegengesetzt beaufschlagten Zustand nach oben ausschwenken und einen sich ergänzenden Windkanal über den unteren Bogenabschnitt des Querstromlüfters freigeben. Wie bereits ausgeführt, geben die Windleitbleche obere und untere, sich ergänzende Windkanäle frei, je nach Hauptwindrichtung. Die äußeren Flächen der Windleitbleche sind dem Drehsinn der Schaufeln des Querstromlüfters entgegengesetzt um einige Winkelgrade abgeknickt. Hierdurch ist eine vorgegebene Zuordnung der Hauptwindrichtung zum oberen oder unteren, sich ergänzenden Windkanal vorgebbar, wobei der Querstromlüfter nur eine Drehrichtung hat. Ergänzender Windkanal deshalb, weil er aus den Kanälen beiderseits des Windrades resultiert. Die Ausgestaltung der Kanäle selbst kann selbstverständlich noch optimiert werden, so daß eine möglichst effiziente Ausnutzung der Windkraft erfolgt.

Vorteilhaft ist ferner vorgesehen, daß im Fall des sich ergänzenden oberen Windkanals die Firstabdeckung im Bereich ihrer dem Wind abgewandten Firstfläche eine sich parallel zum First erstreckende Durchgangsöffnung hat und diese einen dort bei bestimmter Windbeaufschlagung entstehenden Unterdruck auf die jeweils oberen Schaufeln des Querstromlüfters antriebsunterstützend weitergibt. Besonders effizient kann eine Austrittsöffnung für Wind derart angeordnet sein, daß an geeigneter Stelle ein Unterdruck auf die Schaufeln des Querstromlüfters wirkt. Erfindungsgemäß ist dies gewährleistet.

Vorteilhaft ist vorgesehen, daß die Durchgangsöffnung schwenkbewegliche Lamellen gegen Regen, Schnee und Laub hat. Mit diesem einfachen Hilfsmittel ist eine sichere Abdeckung des Firstes gewährleistet und gleichzeitig eine Winddurchlässigkeit in einer Richtung, nämlich im vom Wind beeinflußten Zustand der Windleitbleche.

Gemäß einer besonderen Ausgestaltung ist vorteilhaft vorgesehen, daß die Querschnittsfläche des Querstromlüfters durch die satteldachähnlichen Firstflächen der Firstabdeckung und den First des Daches begrenzt ist, ohne diese zu berühren. Hierdurch ist ein optimaler Wirkungsgrad des Querstromlüfters bereits allein durch die geometrische Anordnung unter der erfindungsgemäßen Firstabdeckung gewährleistet.

Ferner ist vorteilhaft vorgesehen, daß die Traufen der Firstabdeckung jeweils leicht nach vertikal oben aufgewölbt sind. Die Maßnahme vergrößert die wirksame Windquerschnittsfläche und beschleunigt gleichermaßen durch eine kontinuierliche Verengung die Windgeschwindigkeit im Bereich der Kanäle. Die gewölbte Anordnung der Schaufeln des Querstromlüfters oder einer anderen Windradform können auch umgekehrt angeordnet sein. Für das jeweilige geographische Einsatzgebiet können entscheidungsrelevant alle beim Wetterdienst abgefragten Hauptwindrichtungen einbezogen werden.

Vorteilhaft ist vorgesehen, dass eine Mechanik die Windleitbleche anlenkt und eine Windfahne die Mechanik ansteuert. Insbesondere bei schwachen Winden oder auch in einem extrem schrägen Winkel zur Firstlinie einfallenden Wind kann es sein, dass der Winddruck nicht ausreicht, um die Windleitbleche zu schwenken. Um dennoch den Wind zur Energieerzeugung zu nutzen, kann eine Mechanik zur Bewegung der Windleitbleche zum Einsatz gelangen, die abhängig von einer Windfahne die Windleitbleche in die geforderte Stellung bringt.

Vorteilhaft ist vorgesehen, dass Windkraft und/oder elektrische Energie die Mechanik antreiben. Hierdurch kann auf einfache Weise die Mechanik betrieben werden. Im Falle eines schwachen Windes kann mittels einer Untersetzung auch noch die Windkraft allein zum Antrieb ausgenutzt werden.

Gemäß einer besonderen Ausgestaltung ist vorgesehen, dass die Anlage Sockelelemente zur Verankerung an der Dachkonstruktion hat und diese an einen vorhandenen First mit Firstziegeln o. dgl. angepasste derartige Höhen aufweisen, dass die Mantelfläche der Walze des Querstromlüfters in geringem Abstand oberhalb des Firstes bwz. dessen Firstziegels angeordnet ist. Hierdurch ist es möglich, die Windkraftanlage auch sozusagen als Zubehör nachrüstbar auf Dächern anzuordnen, ohne diese zu zerstören oder modifizieren zu müssen.

Lediglich die Sockelelemente sind entsprechend anzupassen. Die Windkraftanlage kann somit nicht nur im Fall von Neubauten sondern auch im Fall von Altbauten zum Einsatz gelangen.

Vorteilhaft ist ferner vorgesehen, dass die Firstabdeckung in Funktion und Material der Abdeckung des Daches entspricht oder aus leichtem und widerstandsfähigem Material ist. Hierdurch kann nicht nur eine optisch positive Anmutung erreicht werden, sondern auch eine Anpassung in Konstruktion und Material an die üblicherweise für Dächer vorhandenen Techniken. Selbstverständlich kann auch anderes, insbesondere leichteres Material zur Anwendung gelangen.

Gemäß einer alternativen Ausgestaltung ist vorgesehen, dass jede Dachfläche eines Satteldaches eine modifizierte Windkraftanlage mit einem dezentral angeordneten Windrad aufweist, deren vertikale Erstreckung maximal der Höhe des Daches entspricht. Hierdurch ist es möglich, die maximale Bauhöhe einzuhalten. D.h., das umbaute Volumen braucht nicht reduziert werden und es können auch Altbauten mit einer erfindungsgemäßen Windkraftanlage ausgerüstet werden.

Vorteilhaft ist vorgesehen, dass die je Dachfläche montierte Anlage eine zum First weisende kurze und eine zur Traufe weisende lange Firstfläche hat und der Windkanal unter der langen Firstfläche ein festmontiertes Windleitblech aufweist, welches je nach Ausrichtung der Schaufeln des Querstromlüfters einen oberen oder unteren ergänzenden Windkanal freigibt. Hierdurch ist es möglich, auf schwenkbare Windleitbleche grundsatzlich zu verzichten. Die Windkraftanlage ist im übrigen quasi nur zweifach zu installieren, hat jedoch den Vorteil, auf jedem beliebigen Dach montiert werden zu können.

Weitere bevorzugte Ausgestaltungen der Erfindung ergeben sich aus den Unteransprüchen.

Ausführungsbeispiele einer erfindungsgemäßen Windkraftanlage für Dächer zur Energiegewinnung werden unter Bezugnahme auf eine Zeichnung nachfolgend näher erläutert. Darin zeigt:
- Fig. 1: eine perspektivische, schematisch Ansicht eines Satteldaches mit einer erfindungsgemäßen Windkraftanlge,
- Fig. 2: einen schematischen Querschnitt durch die Windkraftanlage gemäß Fig. 1 bezüglich einer Hauptwindrichtung,
- Fig. 3: einen Querschnitt gemäß Fig. 2 bezüglich einer entgegengesetzten Hauptwindrichtung,
- Fig. 4: einen Querschnitt gemäß Fig. 2 im Fall eines Daches mit vollständigem Firstbereich, und
- Fig. 5: einen Querschnitt gemäß Fig. 4 mit erfindungsgemäßer Windkraftanlage je Dachfläche.

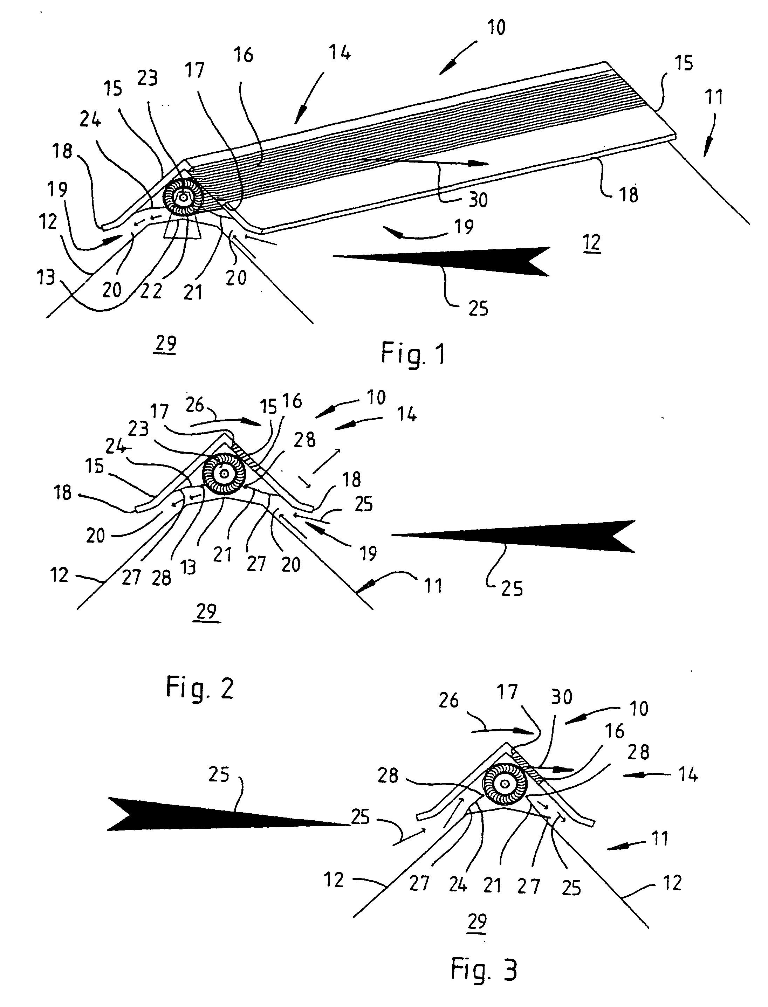

Fig. 1 zeigt eine erfindungsgemäße Windkraftanlage 10 auf einem Satteldach 11, jeweils perspektivisch und schematisch dargestellt. Das Satteldach 11 umfaßt zwei Dachflächen 12, die über einen First 13 miteinander verbunden sind und von diesem schräg zum Boden abfallen. Der First 13 bildet somit die obere Abschlußkante der Dachflächen 12 und weist eine geradlinige horizontale Ausrichtung auf.

Üblicherweise sind die sich im First 13 vereinigenden Dachflächen 12 vertikal mittels Firstziegeln 31, also aus Ziegeln oder einem anderen Dachabdeckungsmaterial zwecks Abdichtung verschlossen.

Erfindungsgemäß wird anstelle von Firstziegeln 31 eine Firstabdeckung 14 mit jeweils zu den Dachflächen 12 parallelen und dazu in vertikalem Abstand angeordneten Firstflächen 15 vorgesehen. Eine der Firstflächen 15 weist in ihrem oberen Bereich eine mit schwenkbaren Lamellen 16 gegen Regen, Schnee und Laub einseitig verschlossene, sich über die gesamt Firstlänge erstreckende Durchgangsöffnung 17 auf. Die Lamellen 16 sind derart schwenkbar, daß ein Luftaustritt gemäß Pfeil 30 aus der Firstabdeckung 14 heraus gewährleistet ist, jedoch nicht umgekehrt.

Die Traufen 18, also die unteren Abschlußkanten der Firstflächen 15 verlaufen parallel zum First 13 und sind leicht nach vertikal oben aufgewölbt. Zwischen den Traufen 18 und den Dachflächen 12 entstehen so längliche schlitzartige Kanalöffnungen 19 mit einer zu Hauptwindrichtungen 25 auszurichtenden Querschnittsflächen. Die Kanalöffnungen 19 dienen hauptsächlich als Windeintritt. Im Verlauf der nachfolgenden Kanäle 20 findet zunächst aufgrund der sich abschwächenden Aufwölbung der Traufen 18 eine Querschnittsverringerung und damit eine Beschleunigung des Windes statt, bevor der Wind, in der Fig. 1 von rechts nach links, ein erstes Windleitblech 21 anhebt, um sodann die Walze 22 eines Querstromlüfters 23 zu passieren, bevor der Wind auf ein zweites Windleitblech 24 trift und dieses ebenfalls anhebt um durch den folgenden Kanal 20 die Windkraftanlage 10 wieder zu verlassen.

Der Querstromlüfter 23 erstreckt sich quasi entlang des Firstes 13 unterhalb der Firstabdeckung 14. Der Querstromlüfter 23 kann integriert einen elektrischen Generator auf seiner Welle aufweisen oder aber auch über einen Keilriemen o. dgl. mit einem Generator im Dachraum 29 in Wirkung stehen.

Fig. 2 zeigt einen schematischen Querschnitt durch die Windkraftanlage 10 auf dem Satteldach 11. Die Pfeile 25 deuten in Richtung und Stärke (unterschiedliche Länge) die Hauptwindrichtung und deren Verteilung im Bereich der Windkraftanlage 10 an. Oberhalb des Firstes 13 ist zentral der Querstromlüfter 23 angeordnet, ohne dass dessen Walze 22 den First 13 oder die Innenseiten der Firstflächen 15 berührt. Der Abstand ist so bemessen, daß möglichst eine optimale Beeinflußung des Querstromlüfters 23 durch den Wind erreichbar ist. Die Windleitbleche 21 und 24 sind zu den Firstflächen 15 schwenkbar entlang und in Abstand zur Mantelfläche der Walze 22 des Querstromlüfters 23 in Lagern 28 gelagert. Der Pfeil 26 deutet die Drehrichtung des Querstromlüfters 23 an. Die Winkelbleche 21 und 24 haben je einen inneren und einen demgegenüber äußeren abgeknickten Abschnitt 27. Die abgeknickten Abschnitte 27 sind in einer Richtung entgegengesetzt der Drehrichtung gemäß Pfeil 26 angeknickt. Hierdurch ist eine einfache und sichere durch den Wind selbst beeinflußbare Verstellung der Windleitbleche möglich.

Die Bewegung der Windleitbleche kann aber auch durch eine Mechanik beeinflusst werden, die z. B. durch eine Windfahne angesteuert wird. Die Mechanik kann allein durch Windkraft, aber auch elektronisch betrieben werden. Im windbeaufschlagten Zustand der dargestellten Windrichtung ergibt sich somit die in Fig. 2 dargestellte Stellung der Windleitbleche 21 und 24, die mit ihren von den Lagern 28 abgewandten und abgeknickten Flächen 27 an die Firstabdeckung 14 anstoßen. Hierdurch sind die Kanäle 20 zu einem unteren, sich ergänzenden Windkanal verbunden. Die Windenergie, wie es auch die sich verkürzenden (Wind) Pfeile 25 andeuten, ist auf den Querstromlüfter 23 übergegangen und über den nicht dargestellten Generator in elektrische Energie umgeformt. Das Anheben des ersten Windleitbleches 21 in Fig. 2 erfolgt durch dessen äußeren abgeknickten Abschnitt 27, da es in seiner unbeeinflußten Stellung auf dem Boden des Kanals 20 aufliegt und der abgeknickte Abschnitt 27 in den Kanal 20 ragt. Im übrigen wird auf die Beschreibung zu Fig. 1 verwiesen.

Fig. 3 zeigt wiederrum einen Querschnitt gemäß Fig. 2, jedoch unter Beaufschlagung mit einer entgegengesetzten Windrichtung gemäß Pfeil 25. Hinsichtlich der Beschreibung wird auf die Beschreibung zu Fig. 2 verwiesen, wobei die Stellung der Windleitbleche 21 und 24 nun der zu Fig. 2 beschriebenen unbeeinflußten Stellung entsprechen. Das Windleitblech 24 gibt nun einen oberen sich ergänzenden Windkanal frei, der über den oberen Bogenabschnitt des Querstromlüfters 23 von links nach rechts in Fig. 3 führt. Aufgrund der Durchgangsöffnung 17, die mit Lamellen 16 verschlossen ist, kann der Wind in dieser Richtung gemäß Pfeil 30 auch schon in diesem Bereich der Firstfläche 15 entweichen. Aufgrund eines sich einstellenden Unterdruckes bei dieser Windrichtung, von links nach rechts in Fig. 3, im Bereich der Durchgangsöffnung 17, der den Querstromlüfter 23 auf dessen Niederdruckseite beschleunigend beeinlußt, ist eine größere Effizienz erreichbar.

Vorteilhaft ist ferner, daß die abgeknickte äußere Fläche 27 des zweiten Windleitbleches 24 ein sicheres Verbleiben in der gemäß Fig. 1 unbeeinflußten, hier beeinflußten Position dadurch gewährleistet, dass die Abschrägung eine Kraftkomponente bei Windbeaufschlagung in Richtung der Dachfläche 12 erzeugt, wodurch das Windleitblech 24 in dieser Position sicher verharrt. Die abgeschrägte äußere Fläche 27 des ersten Windleitbleches 21 verhindert in gleicher Weise Klappergeräusche.

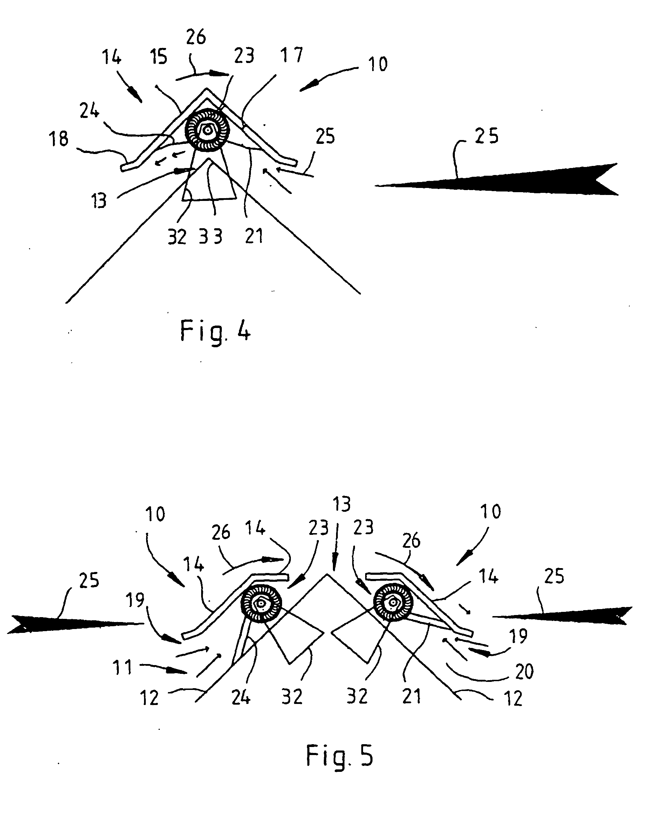

Fig. 4 zeigt eine schematische Ansicht einer erfindungsgemäßen Windkraftanlage 10 mit allen wesentlichen Elementen entsprechend den Fig. 1 bis 3, auf deren Beschreibungen insoweit auch verwiesen wird. Aufgrund einer vertikal höheren Dimensionierung der Sockelelemente 32 gegenüber denjenigen Sockelelementen 32 der Fig. 1 bis 3 ist die Windkraftanlage 10 sozusagen nachrüstbar auf vorhandenen Dächern von Altbauten zu installieren. D. h., Dächer von Altbauten, bei denen der First 13 durch Firstziegel 33 o. dgl. sicher vor Umwelteinflüssen abgedeckt ist, ist weder zu beschädigen, zu demontieren oder in sonstiger Weise wegen des nachträglichen Einbaus der erfindungsgemäßen Windkraftanlage zu beeinträchtigen. Es ist sogar möglich, die Windkraftanlage 10 nach gewisser Zeit zu Revisionszwecken zu demontieren oder auch auf Dauer wieder zu entfernen, ohne dass die Funktion oder das Aussehen des Daches des Altbaus negativ beeinträchtigt werden. Hierzu sind, wie bereits erwähnt, lediglich die Sockelelemente 32, die bei der Dachkonstruktion unterhalb den eigentlichen Dachflächen 12 befestigt sind, vertikal nach oben entsprechend länger auszugestalten. Die übrige Funktion des Daches und auch der Windkraftanlage 10 dadurch unverändert. Die Firstabdeckung 14 kann sogar hinsichtlich Material, wie auch sonst, dem First des Daches angepasst werden, aber auch besonders einfach ausgerüstet sein, da deren Funktion als Firstabdeckung gegen Umwelteinflüsse, wegen der bereits vorhandenen Firstziegeln o. dgl., nicht erforderlich ist.

Fig. 5 zeigt eine weitere alternative Ausgestaltung der Windkraftanlage 10, insbesondere zur Berücksichtigung einer Firsthöhenbegrenzung aufgrund von Bebauungsplänen o. dgl. Funktion und Aufbau dieser Anlagen 10 entsprechen prinzipiell denjenigen gemäß Fig. 1 bis 4. Allerdings werden auf jeder der beiden Dachflächen Querstromlüfter 23 mittels Sockelelementen 32 befestigt, deren höchste Firstabdeckung 14 nicht den First eines z. B. Altbaus vertikal überragt. Entsprechend der Windrichtung 25 ergibt die untere Firstabdeckung 14 zusammen mit der jeweiligen Dachfläche 12 wiederrum eine Kanalöffnung 19, die mit Windleitblechen 21 bzw. 24 je Dachseite ausgerüstet sind, die gegenüber den vorstehenden Alternativen fest installiert sind. Letzteres ist deshalb möglich, da jede der beiden Querstromlüfter nur in einer Richtung mit Wind beaufschlagt werden kann.

Die in der vorstehenden Beschreibung, in den Fig. 1, 2 und 3 sowie in den Ansprüchen offenbarten Merkmale der Erfindung können sowohl einzelnd als auch in beliebiger Kombination für die Verwirklichung der Erfindung in ihren verschiedenen Ausführungsformen wesentlich sein.

## Patentansprüche

1. Windkraftanlage für Dächer zur Energiegewinnung mit einem auf einem Dach montierten Windrad, bei dem das Windrad einen elektrischen Generator antreibt, **dadurch gekennzeichnet, daß** das Windrad (23) und der Generator integraler Bestandteil einer Firstabdeckung (14) sind und in unmittelbarem Abstand zum Windrad (23) zu beiden Seiten Windleitbleche (21, 24) zu Kanalöffnungen (19) hin schwenkbar gelagert sind.

2. Windkraftanlage nach Anspruch 1, **dadurch gekennzeichnet, daß** die Firstabdeckung (14) in Abstand zum Dach (11) und zu der einen oder mehreren Dachflächen (12) des Daches (11) angeordnet ist.

3. Windkraftanlage nach Anspruch 2, **dadurch gekennzeichnet, daß** das Windrad (23) zentral im Bereich des Firstes (13) des Daches (11) oberhalb des Firstes (13) des Daches (11) und unterhalb der Firstabdeckung (14) angeordnet ist.

4. Windkraftanlage nach Anspruch 3, **dadurch gekennzeichnet, daß** das Windrad (23) derart ausrichtbar ist, daß Wind aus einer oder mehreren Richtungen (25) es antreibt und der Wind durch einen von mehreren Kanälen (20), gebildet durch den Abstand zwischen Firstabdeckung (14) und Dachfläche (12) auf das Windrad (23) gelangt.

5. Windkraftanlage nach einem oder mehreren der vorhergehenden Ansprüche, **dadurch gekennzeichnet, daß** bei einem Dach (11) mit horizontaler Firstkante ein sich axial in Abstand parallel zum und oberhalb des Firstes (13) erstreckender Querstromlüfter (23) das Windrad bildet, dessen rotierende Achse indirekt oder direkt den Generator antreibt.

6. Windkraftanlage nach Anspruch 5, **dadurch gekennzeichnet, daß** Übertragungsmittel den im Dachraum (29) angeordneten Generator antreiben oder der Generator integraler Bestandteil des Querstromlüfters (23) auf dessen Achse ist.

7. Windkraftanlage nach Anspruch 6, **dadurch gekennzeichnet, daß** die Firstabdeckung (14) zu jeder Dachfläche (12) weisend eine Traufe (18) hat, die mit der jeweiligen Dachfläche (12) eine längliche schmale Kanalöffnung (19) bildet.

8. Windkraftanlage nach Anspruch 7, **dadurch gekennzeichnet, daß** parallel und in Abstand zur Oberfläche der Walze (22) des Querstromlüfters (23) zu beiden Seiten Windleitbleche (21, 24) im Bereich des unteren Bogenabschnittes der Walze (22) schwenkbar gelagert sind.

9. Windkraftanlage nach Anspruch 8, **dadurch gekennzeichnet, daß** die Windleitbleche (21, 24) um eine zur Längserstreckung der Walze (22) des Lüfters (23) parallele Knickkante etwa im äußeren Drittel entgegen dessen Drehsinn um einige Winkelgrade abgeknickt sind und eine bezüglich ihrer walzennahen Lagerung (28) innere und äußere Flächen (27) aufweisen.

10. Windkraftanlage nach Anspruch 9, **dadurch gekennzeichnet, daß** die äußere abgeknickte Fläche (27) des einen Windleitbleches (21) im unbeeinflußten Zustand in den Kanal (20) ragt und die abgeknickte äußere Fläche (27) des anderen Windleitbleches (24) mit ihrer äußeren Kante auf dem Boden des Kanals (20) aufliegt.

11. Windkraftanlage nach Anspruch 10, **dadurch gekennzeichnet, daß** die Windleitbleche (21, 24) im unbeeinflußten Zustand oder bei einer bestimmten Windrichtung einen sich ergänzenden Windkanal über den oberen Bogenabschnitt des Querstromlüfters (23) freigeben und in einem von Wind entgegengesetzt beaufschlagten Zustand nach oben ausschwenken und einen sich ergänzenden Windkanal über den unteren Bogenabschnitt des Querstromlüfters (23) freigeben.

12. Windkraftanlage nach Anspruch 11, **dadurch gekennzeichnet, daß** im Fall des sich ergänzenden oberen Windkanals die Firstabdeckung (14) im Bereich ihrer dem Wind abgewandten Firstfläche (15) eine sich parallel zum First (13) erstreckende Durchgangsöffnung (17) hat und diese einen dort bei bestimmter Windbeaufschlagung entstehenden Unterdruck auf die jeweils oberen Schaufeln des Querstromlüfters (23) antriebsunterstützend weitergibt.

13. Windkraftanlage nach Anspruch 12, **dadurch gekennzeichnet, daß** die Durchgangsöffnung (17) schwenkbewegliche Lamellen (16) gegen Regen, Schnee und Laub hat.

14. Windkraftanlage nach einem oder mehreren der vorhergehenden Ansprüche, **dadurch gekennzeichnet, daß** die Querschnittsfläche des Querstromlüfters (23) durch die satteldachähnlichen Firstflächen (15) der Firstabdeckung (14) und den First (13) des Daches begrenzt ist, ohne diese zu berühren.

15. Windkraftanlage nach Anspruch 14, **dadurch gekennzeichnet, daß** die Traufen (18) der Firstabdekung (14) jeweils leicht nach vertikal oben aufgewölbt sind.

16. Windkraftanlage nach einem oder mehreren der vorhergehenden Ansprüche, **dadurch gekennzeichnet, dass** eine Mechanik die Windleitbleche (21, 24) anlenkt und eine Windfahne die Mechanik ansteuert.

17. Windkraftanlage nach Anspruch 16, **dadurch gekennzeichnet, dass** Windkraft und/oder elektrische Energie die Mechanik antreiben.

18. Windkraftanlage nach einem oder mehreren der vorhergehenden Ansprüche, **dadurch gekennzeichnet, dass** die Anlage (10) Sockelelemente (32) zur Verankerung an der Dachkonstruktion hat und diese an einen vorhandenen First (13) mit Firstziegeln o. dgl. angepasste derartige Höhen aufweisen, dass die Mantelfläche der Walze (22) des Querstromlüfters (23) in geringem Abstand oberhalb des Firstes (13) bwz. dessen Firstziegels angeordnet ist.

19. Windkraftanlage nach einem oder mehreren der vorhergehenden Ansprüche, **dadurch gekennzeichnet, dass** die Firstabdeckung (14) in Funktion und Material der Abdeckung des Daches (11) entspricht oder aus leichtem und widerstandsfähigem Material ist.

20. Windkraftanlage nach einem oder mehreren der vorhergehenden Ansprüchen, **dadurch gekennzeichnet, dass** jede Dachfläche (12) eines Satteldaches (11) eine modifizierte Windkraftanlage (10) mit einem dezentral angeordneten Windrad (23) aufweist, deren vertikale Erstreckung maximal der Höhe des Daches entspricht.

21. Windkraftanlage nach Anspruch 20, **dadurch gekennzeichnet, dass** die je Dachfläche (12) montierte Anlage (10) eine zum First weisende kurze und eine zur Traufe (18) weisende lange Firstfläche (15) hat und der Windkanal (20) unter der langen Firstfläche (15) ein festmontiertes Windleitblech (21) aufweist, welches je nach Ausrichtung der Schaufeln des Querstromlüfters (23) einen oberen oder unteren ergänzenden Windkanal freigibt.

## Claims

1. A wind energy plant for roofs for generating energy, with a wind wheel assembled on a roof, with which the wind wheel drives an electric generator, **characterised in that** the wind wheel (23) and the generator are an integral component of a ridge covering (14), and to both sides in the direct vicinity of the wind wheel (23), wind guidance plates (21, 24) are pivotally mounted towards channel openings (19).

2. A wind energy plant according to claim 1, **characterised in that** the ridge covering (14) is arranged at a distance to the roof (11) and to the one or more roof surfaces (12) of the roof (11).

3. A wind energy plant according to claim 2, **characterised in that** the wind wheel (23) is arranged centrally in the region of the ridge (13) of the roof (11) above the ridge (13) of the roof (11) and below the ridge covering (14).

4. A wind energy plant according to claim 3, **characterised in that** the wind wheel (23) may be aligned in a manner such that wind drives it from one or more directions (25) and the wind reaches the wind wheel (23) through one of several channels (20) formed by the distance between the ridge covering (14) and the roof surface (12).

5. A wind energy plant according to one or more of the preceding claims, **characterised in that** with a roof (11) with a horizontal ridge edge, a cross-flow fan (23) extending axially at a distance and parallel to and above the ridge (13) forms the wind wheel, whose rotating shaft drives the generator in a direct or indirect manner.

6. A wind energy plant according to claim 5, **characterised in that** transmission means drive the generator arranged in the roof space (29) or the generator is an integral component of the cross-flow fan (23) on its shaft.

7. A wind energy plant according to claim 6, **characterised in that** the ridge covering (14) has eaves (16) which face each roof surface (12) and which with the respective roof surface (12) form an elongate, narrow channel opening (19).

8. A wind energy plant according to claim 7, **characterised in that** wind guidance plates (21, 24) are pivotally mounted in the region of the lower arc section of the rotor (22) parallel and at a distance to the surface of the rotor (22) of the cross-flow fan (23).

9. A wind energy plant according to claim 8, **characterised in that** the wind guidance plates (21, 24) are abruptly bent at an angle about an abrupt bend edge parallel to the longitudinal extension of the rotor (22) of the fan (23) roughly in the outer third part, opposite to the rotation direction of the fan by a few degrees, and with respect their mounting (28) close to the rotor comprise inner and outer surfaces (27).

10. A wind energy plant according to claim 9, **characterised in that** the outer, abruptly angularly bent surface (27) of the one wind guidance plate (21) in the uninfluenced condition projects into the channel (20), and the abruptly angularly bent outer surface (27) of the other wind guidance plate (24) with its outer edge lies on the base of the channel (20).

11. A wind energy plant according to claim 10, **characterised in that** the wind guidance plates (21, 24) in the uninfluenced condition or with a certain wind direction release a supplementary wind channel via the upper arc section of the cross-flow fan (23), and in a condition oppositely impinged by the wind pivot out upwards and release a supplementary wind channel via the lower arc section of the cross-flow fan (23).

12. A wind energy plant according to claim 11, **characterised in that** in the case of the supplementary upper wind channel, the ridge covering (14) in the region of its ridge surface (15) which is distant to the wind has a through-opening (17) extending parallel to the ridge (13) and this transmits a vacuum which arises there with a certain wind impingement further to the respective upper blades of the cross-flow fan (23) in a manner which supports the drive.

13. A wind energy plant according to claim 12, **characterised in that** the through-opening (17) has pivotally movable slats (16) against rain, snow and foliage.

14. A wind energy plant according to one or more of the preceding claims, **characterised in that** the cross-sectional surface area of the cross-flow fan (23) is limited by the gable-roof-like ridge surfaces (15) of the ridge covering (14) and the ridge (13) of the roof, without contacting these.

15. A wind energy plant according to claim 14, **characterised in that** the eaves (18) of the ridge covering (14) in each case are slightly arched vertically upwards.

16. A wind energy plant according to one or more of the preceding claims, **characterised in that** a mechanism articulately connects the wind guidance plates (21, 24) and a vane activates the mechanism.

17. A wind energy plant according to claim 16, **characterised in that** wind force and/or electrical energy drive the mechanism.

18. A wind energy plant according to one or more of the preceding claims, **characterised in that** the plant (10) has base elements (32) for anchoring on the roof design and these have such heights adapted to a present ridge (13) with ridge tiles or likewise, that the peripheral surface of the rotor (22) of the cross-flow fan (23) is arranged as a slight distance above the ridge (13) or its ridge tile.

19. A wind energy plant according to one or more of the preceding claims, **characterised in that** the ridge covering (14) in function and material corresponds to the covering of the roof (11) or is of light and resistant material.

20. A wind energy plant according to one of the preceding claims, **characterised in that** each roof surface (12) of a gable roof (11) has a modified wind energy plant (10) with a decentrally arranged wind wheel (23) whose vertical extension corresponds maximally to the height of the roof.

21. A wind energy plant according to claim 20, **characterised in that** the plant (10) assembled per roof surface (12) has short ridge surface (15) facing the ridge and a long ridge surface (15) facing the eaves (18), and the wind channel (20) below the long ridge surface (15) comprises a firmly mounted wind guidance plate (21) which depending on the alignment of the blades of the cross-flow fan (23) releases and upper or lower supplementary wind channel.

## Revendications

1. Convertisseur d'énergie éolienne sur toitures, pour la production d'énergie avec une roue éolienne montée sur une toiture, dans lequel la roue éolienne entraîne un générateur, **caractérisé en ce que** la roue éolienne (23) et le générateur font intégralement partie d'une couverture faîtière (14) et **en ce que** des déflecteurs de vent (21, 24) sont disposés de part et d'autre, à proximité immédiate de la roue éolienne (23), de façon pivotante en direction d'ouvertures de canaux (19).

2. Convertisseur d'énergie éolienne selon la revendication 1, **caractérisé en ce que** la couverture faîtière (14) est disposée à distance de la toiture (11) et d'une ou de plusieurs surfaces (12) de la toiture (11).

3. Convertisseur d'énergie éolienne selon la revendication 2, **caractérisé en ce que** la roue éolienne (23) est disposée en position centrale dans la région du faîtage (13) de la toiture (11), au-dessus du faîtage (13) de la toiture (11) et en dessous de la couverture faîtière (14).

4. Convertisseur d'énergie éolienne selon la revendication 3, **caractérisé en ce que** la roue éolienne (23) peut être orientée de telle façon que du vent soufflant dans une ou plusieurs directions l'entraîne et que le vent parvienne sur la roue éolienne (23) à travers un des multiples canaux (20), formés par la distance entre la couverture faîtière (14) et la surface de toiture (12).

5. Convertisseur d'énergie éolienne selon une ou plusieurs des revendications précédentes, **caractérisé en ce que**, pour une toiture (11) avec une ligne de faîtage horizontale, un ventilateur à flux transversal (23) s'étendant axialement à distance parallèlement et au-dessus du faîtage (13) forme la roue éolienne, dont l'axe de rotation entraîne directement ou indirectement le générateur.

6. Convertisseur d'énergie éolienne selon la revendication 5, **caractérisé en ce que** des moyens de transmission entraînent le générateur disposé dans les combles (29) ou le générateur fait intégralement partie du ventilateur à flux transversal (23) sur l'axe de celui-ci.

7. Convertisseur d'énergie éolienne selon la revendication 6, **caractérisé en ce que** la couverture faîtière (14) comporte un larmier (18) dirigé vers chaque surface de toiture (12), qui forme avec la surface de toiture correspondante (12) une ouverture de canal étroite allongée (19).

8. Convertisseur d'énergie éolienne selon la revendication 7, **caractérisé en ce que** des déflecteurs de vent (21, 24) sont disposés de part et d'autre, parallèlement et à distance de la surface du cylindre (22) du ventilateur à flux transversal (23), de façon pivotante dans la région de la partie inférieure de l'arc du cylindre (22).

9. Convertisseur d'énergie éolienne selon la revendication 8, **caractérisé en ce que** les déflecteurs de vent (21, 24) sont coudés de quelques degrés autour d'une arête de pliage parallèle à la direction longitudinale du ventilateur (23), environ au tiers extérieur, contrairement au sens de rotation de celui-ci, et présentent une face intérieure et une face extérieure (27) par rapport à leur appui (28) proche du cylindre.

10. Convertisseur d'énergie éolienne selon la revendication 9, **caractérisé en ce que**, lorsqu'elle est au repos, la face coudée extérieure (27) d'un premier déflecteur de vent (21) pénètre dans le canal (20) et la face coudée extérieure (27) de l'autre déflecteur de vent (24) repose par son arête extérieure sur le fond du canal (20).

11. Convertisseur d'énergie éolienne selon la revendication 10, **caractérisé en ce que**, lorsqu'ils sont au repos ou pour une direction déterminée du vent, les déflecteurs de vent (21, 24) libèrent un canal de vent complémentaire sur la partie supérieure de l'arc du ventilateur à flux transversal (23) et, lorsqu'ils sont exposés au vent de direction contraire, ils pivotent vers le haut et libèrent un canal de vent complémentaire sur la partie inférieure de l'arc du ventilateur à flux transversal (23).

12. Convertisseur d'énergie éolienne selon la revendication 11, **caractérisé en ce que**, dans le cas du canal de vent complémentaire supérieur, la couverture faîtière (14) présente une ouverture de passage (17) s'étendant parallèlement au faîtage (13) dans la région de son versant (15) situé sous le vent et **en ce que** celle-ci transmet une dépression, qui se crée à cet endroit pour une exposition au vent déterminée, vers les aubes respectivement supérieures du ventilateur à flux transversal (23) afin de contribuer à son entraînement.

13. Convertisseur d'énergie éolienne selon la revendication 12, **caractérisé en ce que** l'ouverture de passage (17) comporte des lamelles pivotantes (16) de protection contre la pluie, la neige et les feuilles.

14. Convertisseur d'énergie éolienne selon une ou plusieurs des revendications précédentes, **caractérisé en ce que** la grandeur de la section transversale du ventilateur à flux transversal (23) est limitée par les versants (15) analogues à des versants de toiture de la couverture faîtière (14) et par le faîtage (13) de la toiture, sans les toucher.

15. Convertisseur d'énergie éolienne selon la revendication 14, **caractérisé en ce que** les larmiers (18) de la couverture faîtière (14) sont chaque fois légèrement recourbés vers le haut.

16. Convertisseur d'énergie éolienne selon une ou plusieurs des revendications précédentes, **caractérisé en ce qu'**un mécanisme articule les déflecteurs de vent (21, 24) et une girouette commande le mécanisme.

17. Convertisseur d'énergie éolienne selon la revendication 16, **caractérisé en ce que** la force du vent et/ou l'énergie électrique entraînent le mécanisme.

18. Convertisseur d'énergie éolienne selon une ou plusieurs des revendications précédentes, **caractérisé en ce que** l'installation (10) comprend des éléments de socle (32) pour l'ancrage à la structure de la toiture et en _ce que ceux-ci présentent des hauteurs adaptées à un faîtage existant (13) avec des tuiles faîtières ou analogues, de telle façon que la surface latérale du cylindre (22) du ventilateur à flux transversal (23) soit disposée à faible distance au-dessus du faîtage (13) respectivement de sa tuile faîtière.

19. Convertisseur d'énergie éolienne selon une ou plusieurs des revendications précédentes, **caractérisé en ce que** la couverture faîtière (14) correspond, en fonction et en matière, à la couverture de la toiture (11) ou est constituée d'une matière légère et résistante.

20. Convertisseur d'énergie éolienne selon une ou plusieurs des revendications précédentes, **caractérisé en ce que** chaque surface de toiture (12) d'une toiture à versants (11) présente un convertisseur d'énergie éolienne (10) modifié avec une roue éolienne (23) en position décentrée, dont la dimension verticale correspond au maximum à la hauteur de la toiture.

21. Convertisseur d'énergie éolienne selon la revendication 20, **caractérisé en ce que** l'installation (10) montée sur chaque surface de toiture (12) comprend une face faîtière (15) courte dirigée vers le faîtage et une face faîtière (15) longue dirigée vers le larmier (18), et **en ce que** le canal de vent (20) sous la face faîtière (15) longue présente un déflecteur de vent fixe (21), qui libère un canal de vent complémentaire supérieur ou inférieur selon l'orientation des aubes du ventilateur à flux transversal (23).
